# EUROPEAN PATENT APPLICATION

(11) **EP 4 729 833 A1**
(43) Date of publication of application: **22.04.2026**
(21) Application number: 25207731.8
(22) Date of filing: 09.10.2025
(51) Int. Cl.: F21V 33/00, E04F 13/14, E04F 15/08, F21Y 103/10, F21Y 115/10

(54) **BACKLIT LED PANEL WITH NATURAL STONE DIFFUSER**

(30) Priority: 16.10.2024 IT 202400023037
(71) Applicant: Cifralluminio S.r.l., 25135 Brescia (IT)
(72) Inventor: MAITINI, Roberto, I-25135 BRESCIA (IT)
(74) Representative: Pulieri, Gianluca Antonio

(57) **Abstract**

A backlit LED panel (1;100) comprises a backlit LED support having a body (2), a primary diffuser (4), at least one LED strip (20), a screen (6), a double-sided adhesive layer (40), and a secondary diffuser (50) consisting of a marble or onyx slab.

## Description

The present invention relates to the field of lighting devices, and in particular relates to a backlit LED panel with a natural stone diffuser, for example marble or onyx.

Backlit LED panels are today widely used, especially for lighting large environments; backlit LED panels with a marble diffuser are instead usually intended for prestigious residences, boutiques, museums, hotels, to which they give a visual impact that is generally much appreciated.

In the field of backlit LED panels, those of the "edge lighting" type are particularly widespread, provided with a rigid or flexible LED strip arranged on the thickness of an aluminum body, so that the direction of emission of the LED light is incident to the thickness of a transparent plate provided with numerous notches that diffuse the light uniformly on the surface thereof. The transparent plate is generally covered by an opalescent plate (screen). For example, highly appreciated by the market is the backlit LED panel called "Folio^{®}", manufactured and marketed by the Applicant. Further examples of embodiments are illustrated in Italian invention patents No. 102019000007105 and No. 102020000004477, in the name of the Applicant.

Currently, in order to obtain a panel with a marble diffuser, the marble slab is applied to the outer face of the screen. However, the methods currently used to apply the marble slab do not give satisfactory results, in a field that is very demanding with regard to the final visual effect of the device.

For example, according to the prior art, glue is spread on the outer face of the screen and then the marble slab is applied. This procedure, however, when the device is switched on, causes the appearance of shadows or luminous spots on the surface of the marble slab. Mainly, this is due to the fact that the glue behaves like a lens and the variable thickness of the glue, between the outer face of the screen and the inner face of the marble slab, causes the undesired shadow effect. Furthermore, the adhesive surface is in any case not optimal for the purpose.

The object of the present invention is to provide a backlit LED panel with a natural stone diffuser that meets the needs of the field and overcomes the drawbacks mentioned above. This object is achieved by a LED panel according to claim 1. The dependent claims identify further advantageous embodiments.

The features and advantages of the LED panel according to the present invention will be evident from the description given below, provided by way of example and not limitation, in accordance with the figures of the attached drawings, in which:

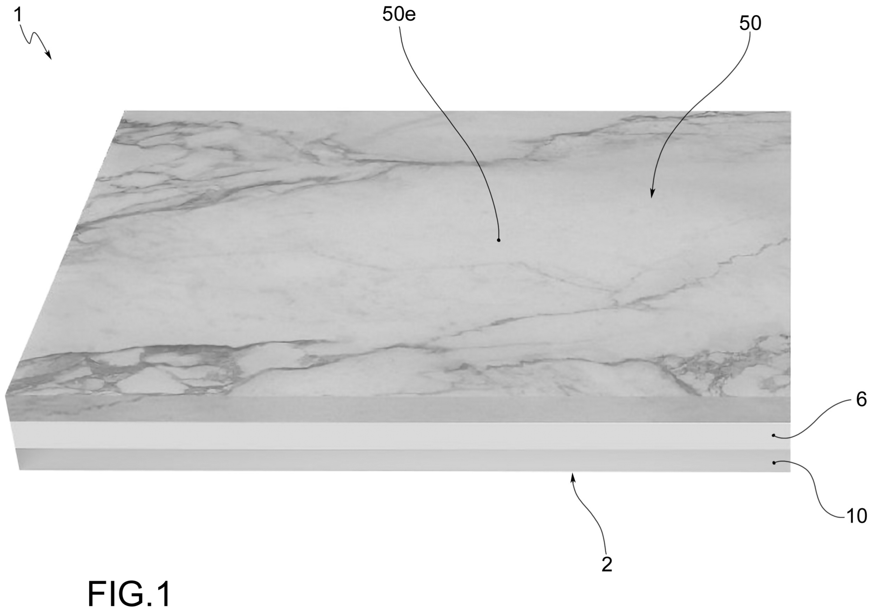

- Figure 1 shows an embodiment of a backlit LED panel, according to an embodiment of the present invention;
- Figure 2 depicts an exploded view of a backlit LED panel, according to an embodiment of the present invention;
- Figure 3a shows a side view of the backlit LED panel of figure 2;
- Figure 3b shows a sectional view of the backlit LED panel of figure 2;
- Figure 4 depicts an exploded view of a backlit LED panel, according to a further embodiment of the present invention;
- Figure 5a shows a side view of the backlit LED panel of figure 4;
- Figure 5b shows a sectional view of the backlit LED panel of figure 4.

With reference to the figures of the attached drawings, number 1 overall denotes a backlit LED panel according to the present invention.

The LED panel 1 comprises a body 2 for supporting the components, a transparent plate or primary diffuser 4, provided with numerous notches on the surface, and an opalescent plate or screen 6.

The body 2 comprises a bottom 8 in the form of a plate made of opaque material, for example aluminum, having a front face 8a, an outer face 8e and a predefined thickness between them in an axial direction X, and a side wall 10, having a predefined height in the axial direction X, arranged peripherally to the bottom 8, projecting axially from it.

For example, the body is made in a single piece; in an alternative embodiment, the body is made in several pieces, including angular elements.

The bottom 8 and the side wall 10 define, inside the body 2, a cavity 12 in which the primary diffuser 4 is completely housed; in other words, the thickness of the primary diffuser 4 is axially contained in the cavity 12, i.e. it does not protrude beyond the height of the side wall 10. The side wall 10 has an outer surface 10e and an inner surface 10i, facing the cavity 12.

Preferably, in addition, the LED panel 1 comprises fastening means, for example mechanically anchored to the body, for fastening the LED panel to a wall or to a ceiling or to a floor.

The primary diffuser 4 consists of a transparent plate having a rear face 4p, facing the bottom 8 of the body 6, and a front face 4a, facing the opposite side. Preferably, the notches are provided on the front face 4a and have a predefined depth in the thickness.

According to one embodiment, the primary diffuser 4 consists of a cast methacrylate transparent plate, with polished inner and outer surfaces.

The LED panel 1 further comprises at least one rigid or flexible LED strip 20 provided with a plurality of LEDs; said LED strip 20 is applied to the inner surface 10i of the side wall 10. The light rays emitted by the LEDs intersect the notches of the primary diffuser 4, causing a homogeneous diffusion of light.

The screen 6 is in the form of a plate, has a rear face 6p, a front face 6a and an axial thickness between them, indicatively between 2 and 15 millimetres, for example between 3 and 10 millimetres.

The screen 6 is superimposed on the primary diffuser 4 and preferably on the side wall 10; preferably, said screen is configured so as to rest on the thickness of the side wall 10, completely covering it.

Preferably, the screen 6 consists of an opalescent plate, for example of cast methacrylate, with a satin-finished rear face and a polished front face.

For the connection between the body 2, the primary diffuser 4 and the screen 6, the LED panel 1 comprises connecting means including a plurality of threaded elements 30, for example screws, arranged peripherally, near the side wall 10 of the body 2, which pass through the thickness of the bottom 8 of the body 2, the thickness of the primary diffuser 4 and engage the screen 6.

Said threaded elements 30 do not protrude on the front face 6a of the screen 6.

The LED panel 1 further comprises a double-sided adhesive layer 40 having a rear face 40p facing the screen 6, a front face 40a and a predefined thickness, preferably between 0.5 and 2 millimetres; the double-sided adhesive layer is applied to the front face 6a of the screen 6 so as to cover it at least partially and preferably completely.

Preferably, the double-sided adhesive layer 40 is applied to the front face 6a of the screen 6 after a layer of primer has been distributed on said front face, appropriately cleaned, in order to promote adhesion of the double-sided adhesive layer.

Preferably, said double-sided adhesive layer is made of a viscoelastic material, preferably acrylic, preferably foamed.

The LED panel 1 further comprises a secondary diffuser 50 consisting of a translucent natural stone slab, that is, at least partially permeable to light rays by virtue of its thickness or mineral composition. For example, the secondary diffuser 50 consists of a marble or onyx slab, superimposed on the double-sided adhesive layer 40.

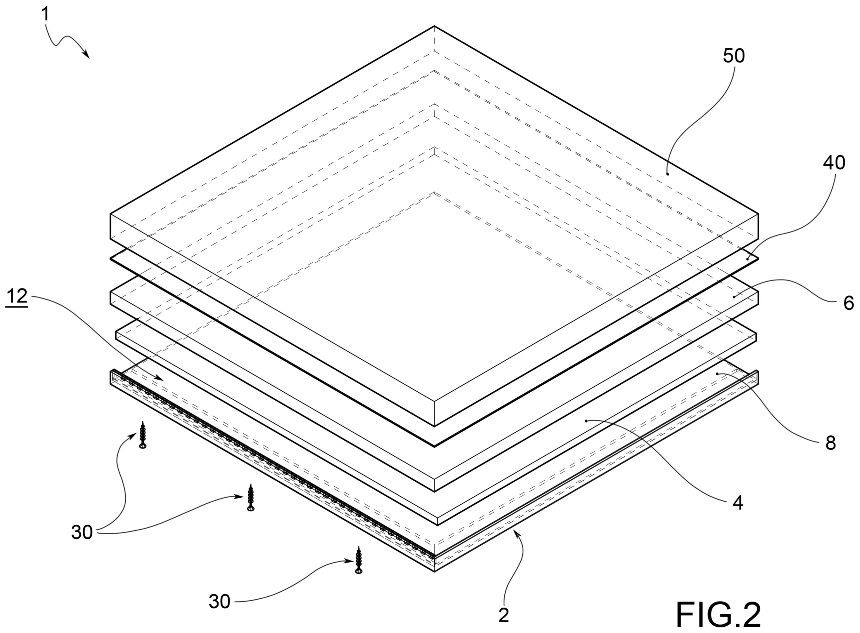

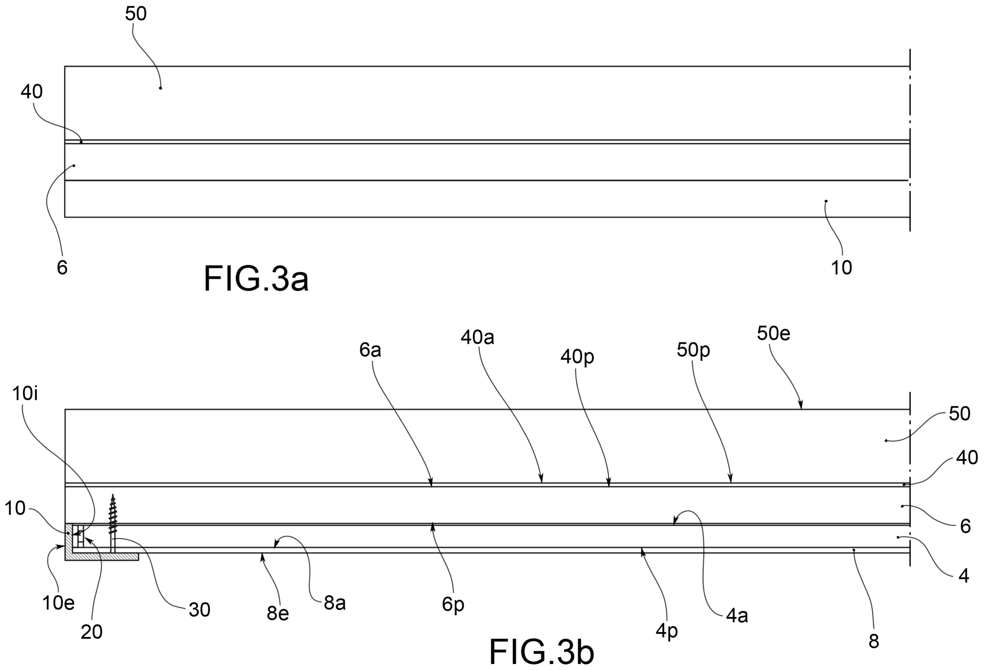

According to a first embodiment (figure 2 and figures 3a and 3b), the slab of the secondary diffuser 50 has a rear face 50p, applied in contact with the front face 40a of the double-sided adhesive layer 40, and an outer face 50e facing the external environment.

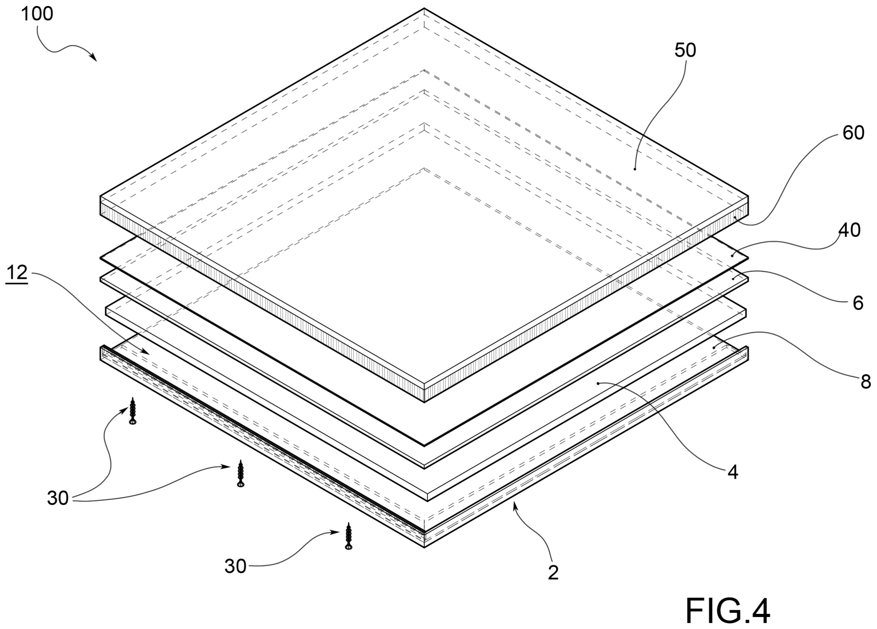

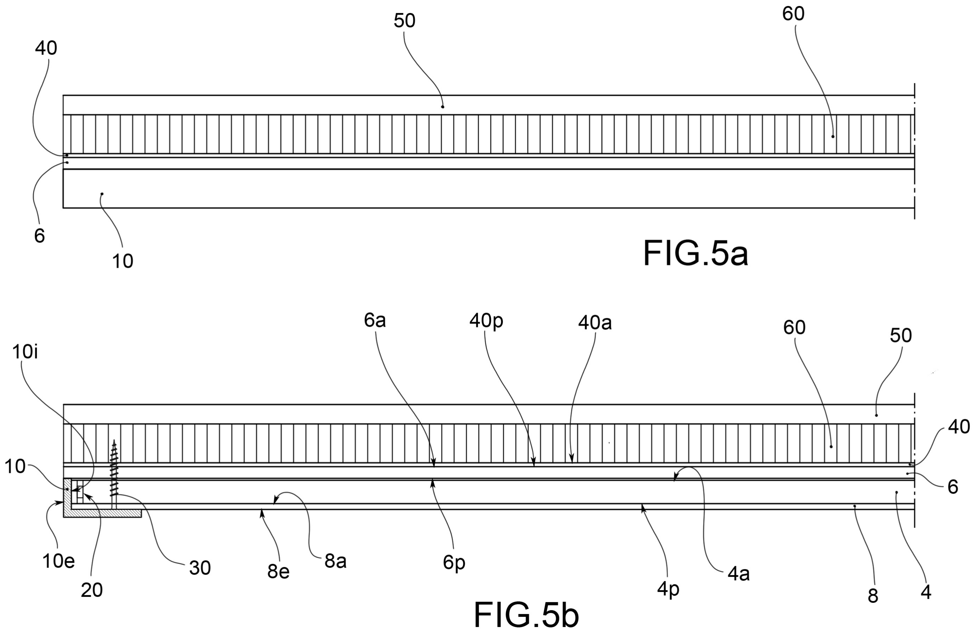

According to a further embodiment (figure 4 and figures 5a and 5b), a LED panel 100 comprises a reinforcing sheet 60, for example a sheet of alveolar polycarbonate or glass, to which, at the front, the slab of the secondary diffuser 50 is applied and at the back it is applied in contact with the front face 40a of the double-sided adhesive layer 40.

A backlit LED support comprises the body 2, the LED strips 20, the primary diffuser 4, the screen 6 and the double-sided adhesive layer 40; a peelable film is applied to the double-sided adhesive layer 40 on the backlit LED support.

Generally, the backlit LED support provided with film is manufactured in a first plant and transported to a second plant, where, generally by an artisan, the film is removed and the natural stone slab 50 is applied, thus obtaining the LED panel 1, or the natural stone slab provided with reinforcing sheet 60 is applied, thus obtaining the LED panel 100.

Innovatively, the LED panel according to the present invention meets the needs of the field, since it makes it possible to appreciate the lighting effects provided by a translucent natural stone, and at the same time overcomes the drawbacks of the prior art, since the double-sided adhesive layer of substantially constant thickness prevents shadows or luminous spots from forming on the outer face of the secondary diffuser.

Furthermore, advantageously, the double-sided adhesive layer makes it possible to absorb the inevitable thickness variations of a natural stone slab, maintaining an almost constant distance from the front face of the opalescent plate.

Furthermore, advantageously, the double-sided adhesive layer makes it possible to absorb the difference in thermal expansion between the natural stone slab and the opalescent plate, which in prior art devices is often the cause of breakages.

It is clear that a person skilled in the art, in order to meet contingent needs, could make modifications to the LED support and to the LED panel described above, all of which are within the scope of protection as defined by the following claims.

## Claims

1. A backlit LED panel (1;100) comprising:
- a backlit LED support comprising:
A) a support body (2) comprising a bottom (8) in the form of a sheet made of an opaque material, for example aluminium, having an outer rear face (8e) and an inner front face (81);
B) a primary diffuser (4), superimposed on the bottom (8) of the body (2), consisting of a transparent sheet, having a rear face (4p), facing the bottom (8), and a front face (4a), provided with notches having a predefined depth in the thickness for diffusing light rays;
C) at least one LED strip (20) provided with a plurality of LEDs, arranged peripherally at the bottom (8) so that the light rays emitted by the LEDs intersect the notches of the primary diffuser (4);
D) a screen (6), superimposed on the primary diffuser (4), consisting of an opalescent sheet, having a rear face (6p) facing the primary diffuser (4), and a front face (6a);
E) a double-sided adhesive layer (40) having a rear face (40p) facing the screen (6), a front face (40a) and a predefined thickness, preferably between 0.5 and 2 millimetres, said double-sided adhesive layer being applied to the front face (6a) of the screen (6) so as to cover it at least partially;
- alternatively:
i) a secondary diffuser (50) having a rear face (50p) applied in contact with the front face (40a) of the double-sided adhesive layer (40), an outer face (50e) facing the external environment and a predefined thickness, wherein the secondary diffuser (50) consists of a translucent natural stone slab;
or
ii) a secondary diffuser (50) consisting of a translucent natural stone slab and a reinforcing sheet (60) to which the sheet of the secondary diffuser (50) is applied at the front and at the back it is applied in contact with the front face (40a) of the double-sided adhesive layer (40).

2. A backlit LED panel according to claim 1, wherein the double-sided adhesive layer (40) is made of a preferably acrylic viscoelastic material, preferably foamed.

3. A backlit LED panel according to claim 1 or 2, wherein the double-sided adhesive layer completely covers the front face (6a) of the screen (6).

4. A backlit LED panel according to any one of the preceding claims, comprising mechanical connection means for the connection between the body (2), the primary diffuser (4), and the screen (6).

5. A backlit LED panel according to claim 4, wherein the mechanical connection means comprise a plurality of threaded elements (30) arranged peripherally at the bottom (8) of the body (2).

6. A backlit LED panel according to any one of the preceding claims, wherein the primary diffuser (4) consists of a sheet made of cast methacrylate.

7. A backlit LED panel according to any one of the preceding claims, comprising fastening means, for example mechanically anchored to the body, for fastening the LED panel to a wall or ceiling or floor.

8. A backlit LED panel (100) according to any one of the preceding claims, wherein the reinforcing sheet is a sheet made of alveolar polycarbonate or glass.
